# EUROPEAN PATENT APPLICATION

(11) **EP 4 726 888 A1**
(43) Date of publication of application: **15.04.2026**
(21) Application number: 23941161.4
(22) Date of filing: 12.07.2023
(51) Int. Cl.: H01M 50/249, H01M 50/258, H01M 10/613, H01M 10/615

(54) **CASE, BATTERY AND ELECTRIC DEVICE**

(30) Priority: 12.06.2023 CN 202321478597 U
(71) Applicant: Contemporary Amperex Technology Co., Limited, Ningde, Fujian 352100 (CN)
(72) Inventor: WU, Kai, Ningde, Fujian 352100 (CN); CHEN, Xuan, Ningde, Fujian 352100 (CN); SHI, Weigang, Ningde, Fujian 352100 (CN); WANG, Zhi, Ningde, Fujian 352100 (CN); WANG, Zengzhong, Ningde, Fujian 352100 (CN)
(74) Representative: Ran, Handong
(86) International application number: PCT/CN2023/107038
(87) International publication number: WO 2024/254932

(57) **Abstract**

The present application relates to the field of batteries, and provides a case, a battery and an electric device. The case comprises an end plate, a panel and a medium flow channel, and the panel is connected to one end of the end plate. The medium flow channel is used for accommodating a heat exchange medium. The medium flow channel is at least partially located on the end plate. The medium flow channel is provided with a medium inlet and a medium outlet, and the medium inlet and/or the medium outlet are/is arranged on the panel. The case is provided with the medium flow channel for the heat exchange medium to pass therethrough to carry out thermal management on a device in the case. The medium flow channel is at least partially located on the end plate, the medium inlet and/or the medium outlet of the medium flow channel are/is arranged on the panel, and the heat exchange medium can directly enter and/or flow out of the medium flow channel through the medium inlet and/or the medium outlet on the panel, so that a reduced amount of pipeline or no pipeline can be used to connect the end plate and the panel, thereby reducing the occupancy of the internal space of the case by the pipeline, and helping to increase the energy density of the battery.

## Description

### CROSS-REFERENCE TO RELATED APPLICATIONS

The present application claims the priority of Chinese Patent Application (No. 2023214785971) filed on June 12, 2023 and entitled "BOX BODY, BATTERY, AND ELECTRICAL DEVICE," the entire contents of which are incorporated herein by reference.

### TECHNICAL FIELD

The present application relates to the field of batteries, and specifically relates to a box body, a battery, and an electrical device.

### BACKGROUND

Batteries are widely used in the field of new energy, for example, electric vehicles and new energy vehicles, which have become a new development trend in the automobile industry. Development of battery technologies needs to take many design factors into consideration at the same time, for example, performance parameters such as cycle life, discharge capacity, and charge-discharge rate. In addition, an energy density of a battery also needs to be taken into consideration. However, at present, batteries have low energy densities.

### SUMMARY OF THE INVENTION

An objective of embodiments of the present application is to provide a box body, a battery, and an electrical device, which are intended to improve the problem of low energy densities of batteries in related technologies.

In a first aspect, an embodiment of the present application provides a box body, the box body includes an end plate, a face plate, and a medium flow channel, and the face plate is connected to one end of the end plate. The medium flow channel is used to accommodate a heat exchange medium. The medium flow channel is at least partially located on the end plate. The medium flow channel is provided with a medium inlet and a medium outlet, and the medium inlet and/or the medium outlet is arranged on the face plate.

In the above technical solution, the box body is provided with the medium flow channel, and the medium flow channel is used for the heat exchange medium to pass through to carry out thermal management on a device in the box body. The medium flow channel is at least partially located on the end plate, the medium inlet and/or the medium outlet of the medium flow channel is arranged on the face plate, and the heat exchange medium can directly enter and/or flow out of the medium flow channel through the medium inlet and/or the medium outlet on the face plate, so that pipelines for connecting the end plate with the face plate can be reduced or not used, an internal space of the box body occupied by the pipelines can be reduced, and an energy density of the battery can be improved.

As an optional technical solution of the embodiments of the present application, the medium flow channel includes a first flow channel and a second flow channel. The first flow channel is arranged on the end plate, the second flow channel is arranged on the face plate, the second flow channel is communicated with the first flow channel, and the medium inlet or the medium outlet for the second flow channel is formed on the face plate.

In the above technical solution, the first flow channel is arranged on the end plate, the second flow channel is arranged on the face plate, and the first flow channel is communicated with the second flow channel. In this way, the heat exchange medium may be fed into the first flow channel on the end plate through the second flow channel on the face plate, or the heat exchange medium in the first flow channel can be allowed to flow out through the second flow channel, so that the pipelines for connecting the end plate with the face plate can be reduced or not used, an internal space of the box body occupied by the pipelines can be reduced, and the energy density of the battery can be improved.

As an optional technical solution of the embodiments of the present application, the end plate includes a first surface, a first opening for the first flow channel is formed on the first surface, the face plate includes a second surface, and a second opening for the second flow channel is formed on the second surface. The first surface is in contact with the second surface, and the first opening is at least partially opposite to the second opening, so that the first flow channel is communicated with the second flow channel.

In the above technical solution, the first surface is in contact with the second surface, so that the first opening of the first flow channel is at least partially opposite to the second opening of the second flow channel, and the first flow channel is directly communicated with the second flow channel. In this way, the pipelines are not needed for connecting the first flow channel with the second flow channel, an internal space of the box body occupied by the pipelines can be reduced, and the energy density of the battery can be improved.

As an optional technical solution of the embodiments of the present application, the medium inlet or the medium outlet for the second flow channel is formed on the surface of the face plate facing away from the end plate.

In the above technical solution, a surface area of the face plate facing away from the end plate is relatively large, and is more convenient to arrange the medium inlet or the medium outlet. Furthermore, the medium inlet has an ample space when connected to a medium feeding pipeline, or the medium outlet has an ample space when connected to a medium outflow pipeline, so that the medium feeding pipeline or the medium outflow pipeline is not likely to interfere with other components, thereby simplifying mounting and improving production efficiency.

As an optional technical solution of the embodiments of the present application, along a first direction, the face plate is connected to one end of the end plate, and the second flow channel runs through two opposite surfaces of the face plate along the first direction.

In the above technical solution, the second flow channel running through the two opposite surfaces of the face plate along the first direction is convenient for processing and manufacturing. On the other hand, the second flow channel is shorter, so that the heat exchange medium can enter the first flow channel more quickly to exchange heat with a device in the box body, achieving a higher sensitivity for thermal management of the device in the box body, or the heat exchange medium can flow out of the medium flow channel more quickly.

As an optional technical solution of the embodiments of the present application, the second flow channel includes a first section and a second section, and the first section is communicated with the second section. The medium inlet or the medium outlet is formed at one end of the first section facing away from the second section, and the second section is communicated with the first flow channel. A cross section of the first section is circular, and cross sections of the second section and the first flow channel are both square.

In the above technical solution, the medium inlet or the medium outlet for the first section is formed on the face plate, and the first section is used to be communicated with the medium feeding pipeline or the medium outflow pipeline. Therefore, the cross section of the first section is circular to facilitate connection with the medium feeding pipeline or the medium outflow pipeline. The second section is used to be communicated with the first flow channel, and the cross sections of the second section and the first flow channel are square to reduce a flow rate of the heat exchange medium, so that the heat exchange medium can more fully exchange heat with the device in the box body. In addition, during manufacturing, the cross section of the first flow channel is square to reduce manufacturing difficulty and cost and improve manufacturing efficiency. The cross section of the second section is adapted to that of the first flow channel.

As an optional technical solution of the embodiments of the present application, the medium flow channel includes two second flow channels, and the first flow channel communicates with the two second flow channels. The medium inlet for one of the second flow channels is formed on the face plate, and the medium outlet for the other of the second flow channels is formed on the face plate.

In the above technical solution, the first flow channel is arranged on the end plate, the two independent second flow channels are arranged on the face plate, and the first flow channel communicates with the two second flow channels. In this way, the heat exchange medium may be fed into the first flow channel on the end plate through one of the second flow channels on the face plate, and the heat exchange medium in the first flow channel may be allowed to flow out through the other of the second flow channels, so that the pipelines for connecting the end plate with the face plate can be further reduced or not used, an internal space of the box body occupied by the pipelines can be reduced, and the energy density of the battery can be improved.

As an optional technical solution of the embodiments of the present application, along a first direction, the face plate is connected to one end of the end plate, and the face plate includes a face plate body and a connecting part. The connecting part protrudes from the face plate body along the first direction, the connecting part connects the end plate with the face plate body by the connecting part, and the medium flow channel is partially formed at the connecting part.

In the above technical solution, the connecting part protruding from the face plate body along the first direction is convenient for connecting the face plate to the end plate by means of the connecting part, for example, welding the connecting part to the end plate. The face plate body is a wall that encloses the accommodating space of the box body. The medium flow channel is partially formed at the connecting part. After the connecting part is connected to the end plate, the medium flow channel is located outside the accommodating space, and the heat exchange medium in the medium flow channel is not likely to damage the device in the accommodating space.

As an optional technical solution of the embodiments of the present application, the connecting part is provided with a mounting structure, the mounting structure is used for mounting an internal device, and the internal device is accommodated in the box body.

In the above technical solution, the mounting structure being arranged on the connecting part, that is, the mounting structure being integrated with the face plate, is convenient for mounting and fixing the internal device to the connecting part. In this way, the number of device mounting beams may be reduced and the components of the box body are simplified. In addition, since the number of the device mounting beams is reduced, the number of positions for welding is also reduced accordingly, thereby simplifying production and improving production efficiency.

As an optional technical solution of the embodiments of the present application, the mounting structure includes a mounting hole, and the mounting hole is provided with internal threads.

In the above technical solution, the mounting structure being the mounting hole arranged on the connecting part helps to simplify a structure of the box body and reduce a weight of the box body. The mounting hole is provided with the internal threads, so that the internal device may fit with the mounting hole via the threads, thereby connecting the box body with the internal device with good stability in a simple and convenient manner.

As an optional technical solution of the embodiments of the present application, the mounting hole is a blind hole.

In the above technical solution, the mounting hole being a blind hole means that the mounting hole may not run through the connecting part, thereby reducing the influence of arrangement of the mounting hole on a structural strength of the connecting part, also eliminating the need for sealing treatment at the mounting hole, and thus reducing the difficulty in manufacturing the box body.

As an optional technical solution of the embodiments of the present application, the connecting part is provided with a plurality of mounting structures, and the plurality of mounting structures are arranged at intervals.

In the above technical solution, since the connecting part is provided with the plurality of mounting structures arranged at intervals, a plurality of mounting positions may be formed between the connecting part and the internal device, thereby not only making the connection between the box body and the internal device more stable, but also reducing a load borne by each mounting position.

As an optional technical solution of the embodiments of the present application, the connecting part is provided with a hanging structure, the hanging structure is used to connect the box body with an external device, and the external device is located outside the box body.

In the above technical solution, the hanging structure being arranged on the connecting part, that is, both the mounting structure and the hanging structure being integrated with the face plate, is convenient for mounting and fixing the external device to the connecting part. In this way, the number of hanging mounting beams may be reduced and the components of the box body are simplified. In addition, since the number of the hanging mounting beams is reduced, the number of positions for welding is also reduced accordingly, thereby simplifying production and improving production efficiency.

As an optional technical solution of the embodiments of the present application, the hanging structure includes a hanging hole, and the hanging hole is provided with internal threads.

In the above technical solution, the hanging structure being the hanging hole arranged on the connecting part helps to simplify a structure of the box body and reduce a weight of the box body. The hanging hole is provided with the internal threads, so that the external device may fit with the hanging hole via the threads, thereby connecting the box body with the external device with good stability in a simple and convenient manner.

As an optional technical solution of the embodiments of the present application, the hanging hole is a blind hole.

In the above technical solution, the hanging hole being a blind hole means that the hanging hole may not run through the connecting part, thereby reducing the influence of arrangement of the hanging hole on a structural strength of the connecting part, also eliminating the need for sealing treatment at the hanging hole, and thus reducing the difficulty in manufacturing the box body.

As an optional technical solution of the embodiments of the present application, the box body includes a hanging component arranged at the connecting part, and the hanging structure is arranged on the hanging component.

In the above technical solution, the hanging structure is arranged on the hanging component, and the box body may be connected to the external device via the hanging component, so that the box body can be connected to the external device more conveniently.

As an optional technical solution of the embodiments of the present application, the hanging component is welded to the connecting part.

In the above technical solution, the hanging component being welded to the connecting part is not only convenient for connection, but also enhances a connection strength between the hanging component and the connecting part with a higher bearing capacity.

As an optional technical solution of the embodiments of the present application, the hanging component is a sleeve, and the sleeve is provided with internal threads.

In the above technical solution, since the hanging component is the sleeve provided with the internal threads, the hanging component and the external device are in threaded fit to hang the box body on the external device with good stability in a simple and convenient manner.

As an optional technical solution of the embodiments of the present application, the connecting part is provided with a plurality of hanging structures, and the plurality of hanging structures are arranged at intervals.

In the above technical solution, since the box body includes the plurality of hanging structures arranged at intervals, a plurality of hanging positions may be formed between the box body and the external device, thereby not only making the connection between the box body and the external device more stable, but also reducing a load borne by each hanging position.

As an optional technical solution of the embodiments of the present application, the face plate body and the connecting part are integrally formed.

In the above technical solution, the face plate body and the connecting part being integrally formed achieves higher overall integrity and higher strength of the face plate.

As an optional technical solution of the embodiments of the present application, the box body includes a side plate, the side plate is arranged opposite to the face plate, and the side plate is connected to the other end of the end plate.

In the above technical solution, the face plate and the side plate opposite to the face plate are arranged on end walls. On the one hand, the structural strength of the box body can be improved. On the other hand, the space for accommodating the internal device can be defined, so that the internal device can be stably assembled in the box body. Furthermore, the face plate and the side plate protrude from the surface of the end plate, and when the internal device is glued to the end plate, a glue overflow space can be effectively controlled, to reduce waste and the risk of environmental pollution caused by glue overflow.

As an optional technical solution of the embodiments of the present application, the box body includes a first box body and a second box body, and the first box body and the second box body are separately arranged and connected. The second box body includes the end plate, the face plate, and the side plate, and the first box body, the end plate, the face plate, and the side plate together define an accommodating space.

In the above technical solution, the first box body and the second box body are convenient to be separately manufactured and assembled into the box body. The end plate, the face plate, and the side plate are all located at the second box body.

In a second aspect, an embodiment of the present application further provides a battery. The battery includes a battery cell and the aforementioned box body, and the battery cell is accommodated in the box body.

In a third aspect, an embodiment of the present application further provides an electrical device. The electrical device includes the aforementioned battery, and the battery is used to provide electrical energy for the electrical device.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is a schematic structural view of a box body according to some embodiments of the present application;
FIG. 3 is an exploded view of a box body according to some embodiments of the present application;
FIG. 4 is a schematic structural view of a second box body according to some embodiments of the present application;
FIG. 5 is a sectional view of a second box body according to some embodiments of the present application;
FIG. 6 is a schematic structural view of a second box body according to some other embodiments of the present application;
FIG. 7 is a sectional view of a second box body according to some other embodiments of the present application;
FIG. 8 is a schematic structural view of a second box body according to some other embodiments of the present application;
FIG. 9 is a sectional view of a second box body according to some other embodiments of the present application;
FIG. 10 is a schematic top view of a second box body according to some embodiments of the present application;
FIG. 11 is a sectional view along A-A in FIG. 10;
FIG. 12 is a schematic bottom view of a second box body according to some embodiments of the present application;
FIG. 13 is a sectional view along B-B in FIG. 12;
FIG. 14 is a schematic bottom view of a second box body according to some other embodiments of the present application;
FIG. 15 is a sectional view along C-C in FIG. 14; and
FIG. 16 is an enlarged view of position D in FIG. 15.

Reference numerals: 10-Box body; 11-First box body; 12-Second box body; 121-End plate; 1211-First surface; 122-face plate; 1221-face plate body; 1222-Connecting part; 12221-Second surface; 1231-Second flow channel; 12311-First section; 12312-Second section; 1232-First flow channel; 1234-Medium inlet; 1235-Medium outlet; 124-Mounting structure; 125-Hanging structure; 126-Hanging component; 127-Side plate; 13-Sealing component; 100-Battery; 200-Controller; 300-Motor; and 1000-Vehicle.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it an independent or alternative embodiment that is mutually exclusive with other embodiments.

In the description of the present application, it should be noted that the terms "mount," "connect," and "attach" should be understood in a broad sense, unless otherwise explicitly specified or defined, for example, connection may be fixed connection, detachable connection or integrated connection, and may be direct connection or indirect connection through an intermediate medium, or may be communication between inner parts of two elements. For those of ordinary skill in the art, the specific meanings of the above terms in the present application can be understood according to specific situations.

In the present application, the term "and/or" is merely an association that describes the associated objects, indicating that there can be three relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The term "plurality" in the present application refers to two or more (including two).

A battery mentioned in the embodiments of the present application refers to a single physical module including one or more battery cells to provide higher voltage and capacity. For example, the battery mentioned in the present application may include a battery module, a battery pack, or the like. The battery typically includes a box body for packaging one or a plurality of battery cells. The box body may prevent liquid or other foreign matters from affecting charging or discharging of the battery cell. The battery cell may include a secondary lithium-ion battery cell, a primary lithium-ion battery cell, a lithium-sulfur battery cell, a sodium lithium-ion battery cell, a sodium-ion battery cell, a magnesium-ion battery cell, or the like.

At present, from development of the market situation, batteries are more and more widely used. Batteries are used not only in energy storage power source systems in hydraulic, thermal, wind, and solar power stations, but also in electric means of transportation such as electric bicycles, electric motorcycles, and electric vehicles, as well as in many fields such as military equipment and aerospace. With continuous expansion of the application field of batteries, a demand therefor in the market is also constantly increasing.

Development of battery technologies needs to take many design factors into consideration at the same time, for example, performance parameters such as cycle life, discharge capacity, and charge-discharge rate. In addition, an energy density of a battery also needs to be taken into consideration. However, at present, batteries have low energy densities.

A battery cell generates a large amount of heat during operation, resulting in an increase in temperature of the battery cell. When the temperature of a battery cell rises to a certain level, it will affect the performance of the battery cell. If the temperature of the single battery cell continues to rise, the single battery cell is likely to experience thermal runaway, causing the battery cell to catch fire or even explode. A water cooling plate is used to dissipate heat from an individual battery cell in related technologies. However, placing the water cooling plate inside a box body may occupy an internal space of the box body and reduce an energy density of a battery.

To improve the energy density of the battery, a water cooling channel is arranged in a base plate in related technologies, and two first through holes are formed in an upper surface of the base plate to form a water cooling inlet and a water cooling outlet respectively. To lead water into and out of the water cooling channel, two pipelines connected to the water cooling inlet and the water cooling outlet are arranged respectively, and second through holes for the pipelines to run through the box body are formed in a face plate connected to one end the base plate. In this way, although the energy density of the battery can be improved to some extent, the pipelines may still occupy part of the internal space of the box body, resulting in a lower energy density of the battery.

In view of the above, an embodiment of the present application provides a box body. The box body includes an end plate, a face plate, and a medium flow channel, and the face plate is connected to one end of the end plate. The medium flow channel is used to accommodate a heat exchange medium. The medium flow channel is at least partially located on the end plate. The medium flow channel is provided with a medium inlet and a medium outlet, and the medium inlet and/or the medium outlet is arranged on the face plate.

The box body is provided with the medium flow channel, and the medium flow channel is used for the heat exchange medium to pass through to carry out thermal management on a device in the box body. The medium flow channel is at least partially located on the end plate, the medium inlet and/or the medium outlet of the medium flow channel is arranged on the face plate, and the heat exchange medium can directly enter and/or flow out of the medium flow channel through the medium inlet and/or the medium outlet on the face plate, so that pipelines for connecting the end plate with the face plate can be reduced or not used, an internal space of the box body occupied by the pipelines can be reduced, and an energy density of the battery can be improved.

The technical solutions described in the embodiments of the present application are applicable to batteries and electrical devices using batteries.

The electrical devices may be vehicles, mobile phones, portable devices, laptops, ships, spacecrafts, electric toys, electric tools, and the like. The spacecrafts include airplanes, rockets, space shuttles, spaceships, and the like; the electric toys include fixed or mobile electric toys, such as game consoles, electric vehicle toys, electric ship toys, and electric airplane toys; the electric tools include electric tools for metal cutting, electric tools for grinding, electric tools for assembling and electric tools for railways, such as electric drills, electric grinders, electric wrenches, electric screwdrivers, electric hammers, electric impact drills, concrete vibrators, and electric planers. The electrical devices are not specially limited in the embodiments of the present application.

For ease of description, in the following embodiments, the electrical device is, for example, a vehicle.

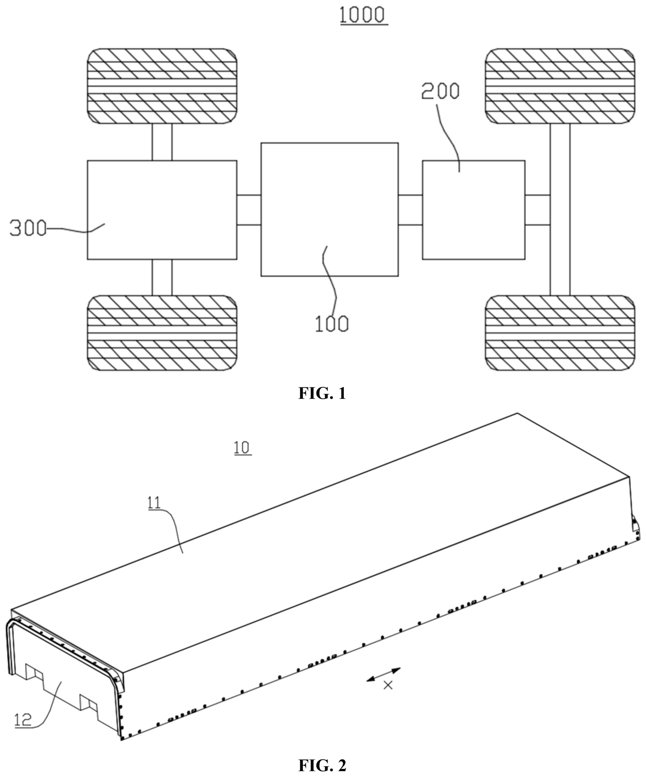

Referring to FIG. 1, a schematic structural view of a vehicle 1000 according to some embodiments of the present application is provided. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is arranged inside the vehicle 1000, and the battery 100 may be arranged at a bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 may be used not only as an operating power source for the vehicle 1000, but also as a driving power source for the vehicle 1000, to replace or partially replace fuel or natural gas to provide driving power for the vehicle 1000.

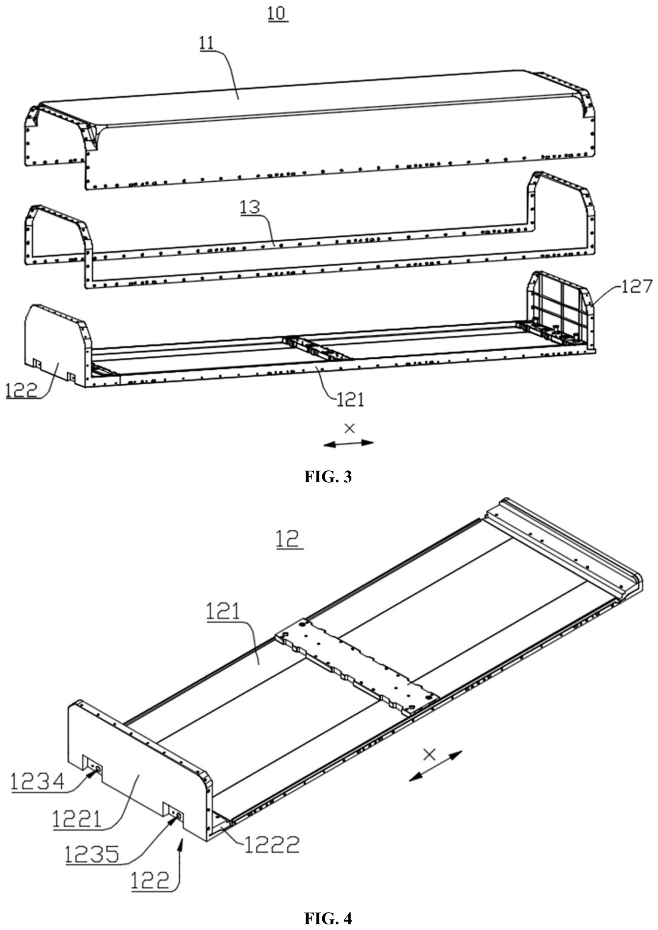

Referring to FIG. 2 and FIG. 3, a schematic structural view of a box body 10 according to some embodiments of the present application is provided in FIG. 2. An exploded view of a box body 10 according to some embodiments of the present application is provided in FIG. 3. The battery 100 includes a box body 10 and a battery cell, and the battery cell is accommodated in the box body 10. The box body 10 is used to provide an accommodating space for the battery cell, and the box body 10 may use various structures. In some embodiments, the box body 10 may include a first box body 11 and a second box body 12. The first box body 11 and the second box body 12 are covered with each other, and the first box body 11 and the second box body 12 together define an accommodating space for accommodating the battery cell. The second box body 12 may be a hollow structure with one end open, the first box body 11 may be a plate-like structure, and an open side of the second box body 12 is covered with the first box body 11, so that the first box body 11 and the second box body 12 together define the accommodating space. Both the first box body 11 and the second box body 12 may also be hollow structures with one side open, and an open side of the second box body 12 is covered with an open side of the first box body 11. Referring to FIG. 2 and FIG. 3, in the embodiments shown therein, both the first box body 11 and the second box body 12 are U-shaped structures. An open end of the second box body 12 is covered with an open end of the first box body 11. Certainly, the box body 10 formed by the first box body 11 and the second box body 12 may be of various shapes, for example, a cylinder and a cuboid.

In the battery 100, there may be a plurality of battery cells, and the plurality of battery cells may be connected in series, in parallel or in series-parallel, wherein the series-parallel connection means that the plurality of battery cells are connected in both series and parallel. The plurality of battery cells may be directly connected in series, in parallel, or in series-parallel, and then an entirety formed by the plurality of battery cells is accommodated in the box body 10. Certainly, the battery 100 may also be formed by connecting the plurality of battery cells in series, in parallel, or in series-parallel to form a battery module, and then connecting a plurality of battery modules in series, in parallel, or in series-parallel to form an entirety to be accommodated in the box body 10. The battery 100 may further include other structures. For example, the battery 100 may further include a busbar component used to achieve electrical connection between the plurality of battery cells.

Each battery cell may be a secondary battery cell or a primary battery cell; or may be a lithium-sulfur battery cell, a sodium-ion battery cell, or a magnesium-ion battery cell, but is not limited thereto. The battery cell may be in a cylinder shape, a flat body shape, a cuboid shape, or other shapes.

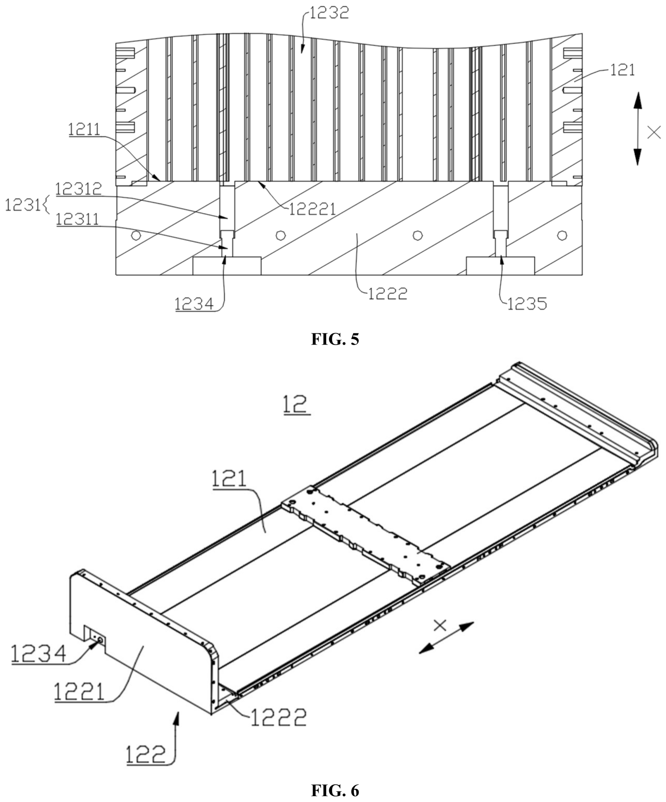

Referring to FIG. 2, FIG. 3, FIG. 4, and FIG. 5, a schematic structural view of a second box body 12 according to some embodiments of the present application is provided in FIG. 4. A sectional view of a second box body 12 according to some embodiments of the present application is provided in FIG. 5. An embodiment of the present application provides a box body 10, the box body 10 includes an end plate 121, a face plate 122, and a medium flow channel, and the face plate 122 is connected to one end of the end plate 121. The medium flow channel is used to accommodate a heat exchange medium. The medium flow channel is at least partially located on the end plate 121. The medium flow channel is provided with a medium inlet 1234 and a medium outlet 1235, and the medium inlet 1234 and/or the medium outlet 1235 is arranged on the face plate 122.

The end plate 121 may be any of walls that make up the box body 10. To improve a heat exchange effect between the heat exchange medium in the medium flow channel and a device in the box body 10, the end plate 121 may be a wall with the largest area in the box body 10. Optionally, the end plate 121 is a bottom plate of the box body 10. In this way, the end plate 121 may be in contact with the device in the box body 10, thereby improving the heat exchange effect.

The face plate 122 is a wall connected to one end of the end plate 121. When the end plate 121 is the bottom plate of the box body 10, the face plate 122 may be a wall for providing high voltage output and low voltage output.

The medium flow channel is a channel for the heat exchange medium to flow through. The heat exchange medium exchanges heat with the device in the box body 10 to achieve thermal management of the device in the box body 10. The heat exchange medium may be a liquid medium, such as water or oil. The heat exchange medium may also be a gas medium, such as air.

The medium flow channel may be partially arranged on the end plate 121 and partially arranged on the face plate 122. The medium flow channel may also be located within the end plate 121 completely. In this case, a pipeline may be connected to the medium flow channel, thereby feeding the heat exchange medium into the medium flow channel or allowing the heat exchange medium in the medium flow channels to flow out.

The medium inlet 1234 is an opening for the heat exchange medium to flow into the medium flow channel. The medium outlet 1235 is an opening for the heat exchange medium to flow out of the medium flow channel. Generally speaking, the medium flow channel is provided with one medium inlet 1234 and one medium outlet 1235, and the medium inlet 1234 and the medium outlet 1235 are located at both ends of the medium flow channel respectively. Certainly, a plurality of medium inlets 1234 and/or a plurality of medium outlets 1235 may also be arranged.

In the present application, the face plate 122 may be provided with only the medium inlet 1234, or only the medium outlet 1235, or both the medium inlet 1234 and the medium outlet 1235, and the number of the medium inlet 1234 and the number of the medium outlet 1235 are not limited.

The box body 10 is provided with the medium flow channel, and the medium flow channel is used for the heat exchange medium to pass through to carry out thermal management on the device in the box body 10. The medium flow channel is at least partially located on the end plate 121, the medium inlet 1234 and/or the medium outlet 1235 of the medium flow channel is arranged on the face plate 122, and the heat exchange medium can directly enter and/or flow out of the medium flow channel through the medium inlet 1234 and/or the medium outlet 1235 on the face plate 122, so that pipelines for connecting the end plate 121 with the face plate 122 can be reduced or not used, an internal space of the box body 10 occupied by the pipelines can be reduced, and an energy density of the battery 100 can be improved.

Referring to FIG. 4 and FIG. 5, in some embodiments, the medium flow channel includes a first flow channel 1232 and a second flow channel 1231, the first flow channel 1232 is arranged on the end plate 121, and the second flow channel 1231 is arranged on the face plate 122. The second flow channel 1231 is communicated with the first flow channel 1232. The medium inlet 1234 or the medium outlet 1235 for the second flow channel 1231 is formed on the face plate 122.

The first flow channel 1232 is a part of the medium flow channel arranged on the end plate 121. The second flow channel 1231 is a part of the medium flow channel arranged on the face plate 122. One end of the second flow channel 1231 forms the medium inlet 1234 or the medium outlet 1235 on the face plate 122, and the other end of the second flow channel 1231 is communicated with the first flow channel 1232.

"The second flow channel 1231 being communicated with the first flow channel 1232" may refer to that the second flow channel 1231 is directly communicated with the first flow channel 1232, or that the second flow channel 1231 is indirectly communicated with the first flow channel 1232, for example, the second flow channel 1231 is indirectly communicated with the first flow channel 1232 through a pipeline.

Referring to FIG. 4 and FIG. 5, in the embodiments as shown in FIG. 4 and FIG. 5, the second flow channel 1231 is directly communicated with the first flow channel 1232, and a pipeline is not needed between the second flow channel 1231 and the first flow channel 1232, so that an internal space of the box body occupied by the pipeline can be reduced, and the energy density of the battery 100 can be improved.

The first flow channel 1232 is arranged on the end plate 121, the second flow channel 1231 is arranged on the face plate 122, and the first flow channel 1232 is communicated with the second flow channel 1231. In this way, the heat exchange medium may be fed into the first flow channel 1232 on the end plate 121 through the second flow channel 1231 on the face plate 122, or the heat exchange medium in the first flow channel 1232 can be allowed to flow out through the second flow channel 1231, so that the pipelines for connecting the end plate 121 with the face plate 122 can be reduced or not used, an internal space of the box body 10 occupied by the pipelines can be reduced, and the energy density of the battery 100 can be improved.

Referring to FIG. 4 and FIG. 5, in some embodiments, the end plate 121 includes a first surface 1211, a first opening for the first flow channel 1232 is formed on the first surface 1211. The face plate 122 includes a second surface 12221, and a second opening for the second flow channel 1231 is formed on the second surface 12221. The first surface 1211 is in contact with the second surface 12221, and the first opening is at least partially opposite to the second opening, so that the first flow channel 1232 is communicated with the second flow channel 1231.

The first surface 1211 refers to a surface of the end plate 121 facing toward the face plate 122. The second surface 12221 refers to a surface of the face plate 122 facing toward the end plate 121.

The first flow channel 1232 extends to the first surface 1211 and forms the first opening on the first surface 1211. The second flow channel 1231 extends to the second surface 12221 and forms the second opening on the second surface 12221. Optionally, one end of the second flow channel 1231 forms the medium inlet 1234 or the medium outlet 1235 on the face plate 122, and the other end of the second flow channel 1231 forms the second opening on the second surface 12221.

When the face plate 122 is connected to the end plate 121, the first surface 1211 is in contact with the second surface 12221, and the first opening is at least partially opposite to the second opening, so that the first flow channel 1232 is communicated with the second flow channel 1231, and the heat exchange medium can enter the first flow channel 1232 from the second flow channel 1231 through the second opening and the first opening, or the heat exchange medium can enter the second flow channel 1231 from the first flow channel 1232 through the first opening and the second opening.

It should be noted that "the first opening being at least partially opposite to the second opening" includes two situations: the first opening is partially opposite to the second opening, and the first opening is completely opposite to the second opening. When the first opening is completely opposite to the second opening, the projections of the first opening and the second opening may completely overlap, or one of the projections may fall within the range of the other projection.

The first surface 1211 is in contact with the second surface 12221, so that the first opening of the first flow channel 1232 is at least partially opposite to the second opening of the second flow channel 1231, and the first flow channel 1232 is directly communicated with the second flow channel 1231. In this way, the pipelines are not needed for connecting the first flow channel 1232 with the second flow channel 1231, an internal space of the box body 10 occupied by the pipelines can be reduced, and the energy density of the battery 100 can be improved.

Referring to FIG. 4 and FIG. 5, in some embodiments, the medium inlet 1234 or the medium outlet 1235 for the second flow channel 1231 is formed on the surface of the face plate 122 facing away from the end plate 121.

Along a first direction, the face plate 122 is connected to one end of the end plate 121. Referring to FIG. 4 and FIG. 5, the first direction may be the X direction shown in the figures.

Along the first direction, the face plate 122 has the second surface 12221 and a third surface opposite to each other. The second surface 12221 is arranged facing toward the end plate 121, the third surface is arranged facing away from the end plate 121, and the medium inlet 1234 or the medium outlet 1235 is formed on the third surface.

A surface area of the face plate 122 facing away from the end plate 121 is relatively large, and is more convenient to arrange the medium inlet 1234 or the medium outlet 1235. Furthermore, the medium inlet 1234 has an ample space when connected to a medium feeding pipeline, or the medium outlet 1235 has an ample space when connected to a medium outflow pipeline, so that the medium feeding pipeline or the medium outflow pipeline is not likely to interfere with other components, thereby simplifying mounting and improving production efficiency.

In some other embodiments, referring to FIG. 4 and FIG. 5, a groove may be arranged on one side of the face plate 122 facing away from the end plate 121, and the medium inlet 1234 or the medium outlet 1235 may be arranged on a bottom wall of the groove.

Referring to FIG. 4 and FIG. 5, in some embodiments, along the first direction, the face plate 122 is connected to one end of the end plate 121, and the second flow channel 1231 runs through two opposite surfaces of the face plate 122 along the first direction.

Along a first direction, the face plate 122 is connected to one end of the end plate 121. Referring to FIG. 4 and FIG. 5, the first direction may be the X direction shown in the figures.

The second flow channel 1231 extends along the first direction, and the second flow channel 1231 may extend from the surface of the face plate 122 facing away from the end plate 121 to the surface of the face plate 122 facing toward the end plate 121, that is, from the third surface to the second surface 12221. In this case, the second flow channel 1231 is a straight flow channel.

The second flow channel 1231 running through the two opposite surfaces of the face plate 122 along the first direction is convenient for processing and manufacturing. On the other hand, the second flow channel 1231 is shorter, so that the heat exchange medium can enter the first flow channel 1232 more quickly to exchange heat with a device in the box body 10, achieving a higher sensitivity for thermal management of the device in the box body 10, or the heat exchange medium can flow out of the medium flow channel more quickly.

In some other embodiments, the second flow channel 1231 may be a curved flow channel or a bent flow channel. For example, the second flow channel 1231 may include a first part, a second part, and a third part, wherein the first part extends along the first direction, the second part extends along a direction perpendicular to the first direction, and the third part extends along the first direction. The second part communicates with the first part with the second part. The first part forms the medium inlet 1234 or the medium outlet 1235 on the face plate 122, and the third part forms the second opening on the face plate 122.

Referring to FIG. 4 and FIG. 5, in some embodiments, the second flow channel 1231 includes a first section 12311 and a second section 12312, and the first section 12311 is communicated with the second section 12312. The medium inlet 1234 or the medium outlet 1235 is formed at one end of the first section 12311 facing away from the second section 12312, and the second section 12312 is communicated with the first flow channel 1232. A cross section of the first section 12311 is circular, and cross sections of the second section 12312 and the first flow channel 1232 are both square.

The first section 12311 and the second section 12312 are two parts of the second flow channel 1231, with the first section 12311 being further away from the first flow channel 1232 than the second section 12312. One end of the first section 12311 forms the medium inlet 1234 or the medium outlet 1235 on the face plate 122, and the other end of the first section 12311 may be communicated with the second section 12312. The second section 12312 communicates with the first section 12311 with the first flow channel 1232. Optionally, one end of the second section 12312 is communicated with the first section 12311, and the other end of the second section 12312 forms the second opening on the face plate 122.

"The cross section of the first section 12311" refers to a cross section of the first section 12311 along a direction perpendicular to an extension direction thereof. Correspondingly, "the cross sections of the second section 12312 and the first flow channel 1232" refer to a cross section of the second section 12312 along a direction perpendicular to an extension direction thereof and a cross section of the first flow channel 1232 along a direction perpendicular to an extension direction thereof.

The medium inlet 1234 or the medium outlet 1235 for the first section 12311 is formed on the face plate 122, and the first section 12311 is used to be communicated with the medium feeding pipeline or the medium outflow pipeline. Therefore, the cross section of the first section 12311 is circular to facilitate connection with the medium feeding pipeline or the medium outflow pipeline. The second section 12312 is used to be communicated with the first flow channel 1232, and the cross sections of the second section 12312 and the first flow channel 1232 are square to reduce a flow rate of the heat exchange medium, so that the heat exchange medium can more fully exchange heat with the device in the box body 10. In addition, during manufacturing, the cross section of the first flow channel 1232 is square to reduce manufacturing difficulty and cost and improve manufacturing efficiency. The cross section of the second section 12312 is adapted to that of the first flow channel 1232.

Referring to FIG. 4 and FIG. 5, in some embodiments, the medium flow channel includes two second flow channels 1231, and the first flow channel 1232 communicates with the two second flow channels 1231. The medium inlet 1234 for one of the second flow channels 1231 is formed on the face plate 122, and the medium outlet 1235 for the other of the second flow channels 1231 is formed on the face plate 122.

The first flow channel 1232 is arranged on the end plate 121, the two independent second flow channels 1231 are arranged on the face plate 122, and the first flow channel 1232 communicates with the two second flow channels 1231. In this way, the heat exchange medium may be fed into the first flow channel 1232 on the end plate 121 through one of the second flow channels 1231 on the face plate 122, and the heat exchange medium in the first flow channel 1232 may be allowed to flow out through the other of the second flow channels 1231, so that the pipelines for connecting the end plate 121 with the face plate 122 can be further reduced or not used, an internal space of the box body 10 occupied by the pipelines can be reduced, and the energy density of the battery 100 can be improved.

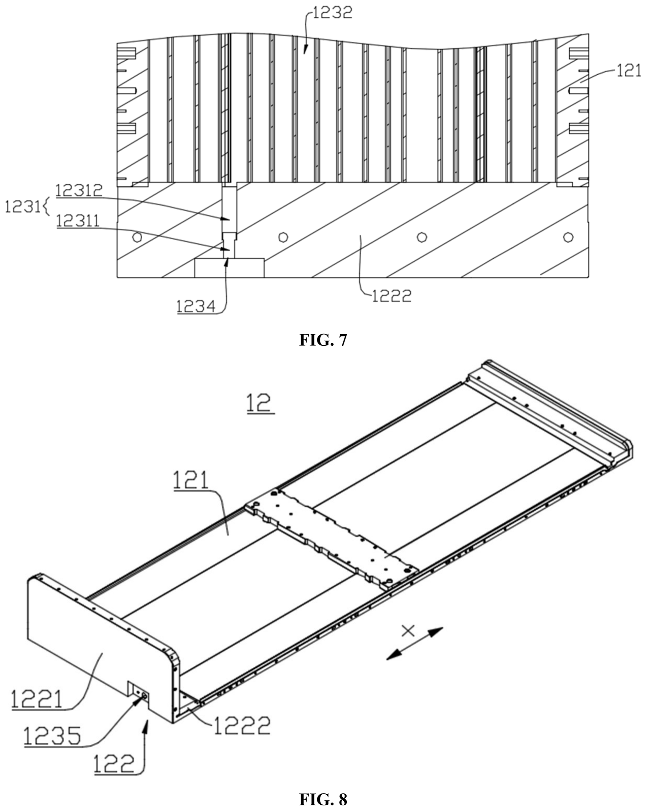

Referring to FIG. 6 and FIG. 7, a schematic structural view of a second box body 12 according to some other embodiments of the present application is provided in FIG. 6. A sectional view of a second box body 12 according to some other embodiments of the present application is provided in FIG. 7. In some other embodiments, only one second flow channel 1231 is arranged on the face plate 122, and the medium inlet 1234 for the second flow channel 1231 is formed on the face plate 122.

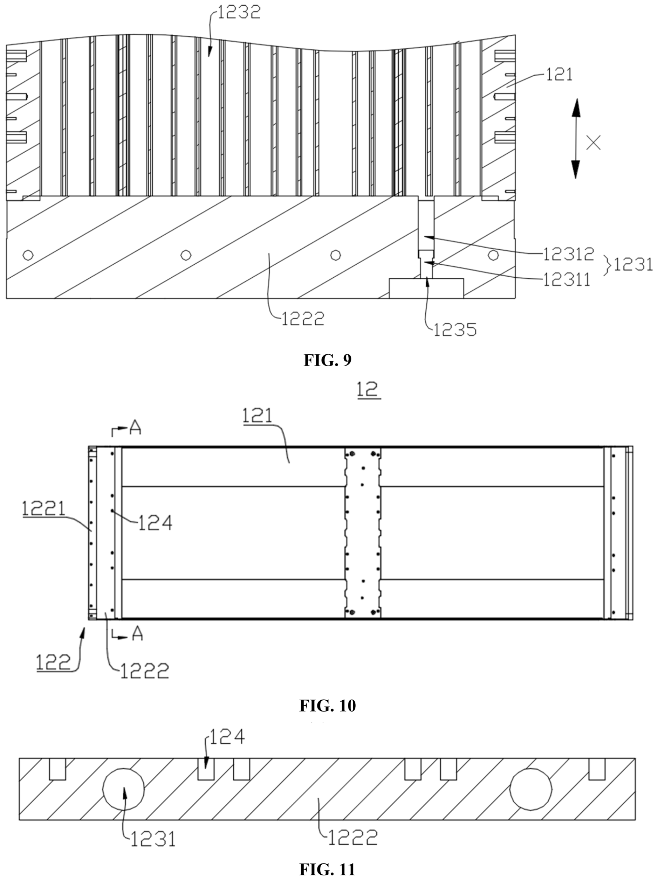

Referring to FIG. 8 and FIG. 9, a schematic structural view of a second box body 12 according to some other embodiments of the present application is provided in FIG. 8. A sectional view of a second box body 12 according to some other embodiments of the present application is provided in FIG. 9. In some other embodiments, only one second flow channel 1231 is arranged on the face plate 122, and the medium outlet 1235 for the second flow channel 1231 is formed on the face plate 122.

Referring to FIG. 8 and FIG. 9, in some embodiments, along a first direction, the face plate 122 is connected to one end of the end plate 121. The face plate 122 includes a face plate body 1221 and a connecting part 1222. The connecting part 1222 protrudes from the face plate body 1221 along the first direction, and the connecting part 1222 connects the end plate 121 with the face plate body 1221. The medium flow channel is partially formed at the connecting part 1222.

The face plate body 1221 is a plate-like structure. The face plate body 1221 is used to enclose together with other walls of the box body 10 to form an accommodating space.

The connecting part 1222 is a part on the face plate 122 for connection with the end plate 121. Along the first direction, the connecting part 1222 protrudes from the face plate body 1221. Optionally, the face plate body 1221 and the connecting part 1222 are connected to form an L-shaped structure.

A portion of the medium flow channel is formed at the end plate 121, and another portion of the medium flow channel is formed at the connecting part 1222. The medium flow channel may be partially located in the face plate body 1221 or not located in the face plate body 1221.

The connecting part 1222 protruding from the face plate body 1221 along the first direction is convenient for connecting the face plate 122 to the end plate 121 by means of the connecting part 1222, for example, welding the connecting part 1222 to the end plate 121. The face plate body 1221 is a wall that encloses the accommodating space of the box body 10. The medium flow channel is partially formed in the connecting part 1222. After the connecting part 1222 is connected to the end plate 121, the medium flow channel is located outside the accommodating space, and the heat exchange medium in the medium flow channel is not likely to damage the device in the accommodating space.

Referring to FIG. 10 and FIG. 11, a top schematic view of a second box body 12 according to some embodiments of the present application is provided in FIG. 10. A sectional view along A-A in FIG. 10 is provided in FIG. 11. In some embodiments, the connecting part 1222 is provided with a mounting structure 124, and the mounting structure 124 is used for mounting an internal device. The internal device is accommodated in the box body 10.

The mounting structure 124 is a structure used to mount and fix an internal device in the box body 10. The internal device may be a battery cell, a battery module, or the like.

The mounting structure 124 may be a through hole, a blind hole, a threaded hole, a hook, a slide rail, a guide rail, a lock catch, or the like. The mounting structure 124 may be a structure formed directly on the connecting part 1222, and is integrally formed with the connecting part 1222. For example, the mounting structure 124 is a threaded hole machined on the connecting part 1222, or the mounting structure 124 is a track formed by extrusion integrally with the connecting part 1222. The mounting structure 124 may also be formed on a part connected to the connecting part 1222. For example, the mounting structure 124 is a threaded hole on a part such as a sleeve and a nut, or the mounting structure 124 is a track on a guide rail.

The mounting structure 124 being arranged on the connecting part 1222, that is, the mounting structure 124 being integrated with the face plate 122, is convenient for mounting and fixing the internal device to the connecting part 1222. In this way, the number of device mounting beams may be reduced and the components of the box body 10 are simplified. In addition, since the number of the device mounting beams is reduced, the number of positions for welding is also reduced accordingly, thereby simplifying production and improving production efficiency.

Referring to FIG. 10 and FIG. 11, in some embodiments, the mounting structure 124 includes a mounting hole.

The mounting hole may be directly arranged on the connecting part 1222. Along a thickness direction of the connecting part 1222, the mounting hole is recessed from a surface of the connecting part 1222 facing toward the inside of the box body 10 to that facing away from the inside of the box body 10. The mounting hole may be round, square, hexagonal, or the like.

One or a plurality of mounting holes may be arranged, wherein "a plurality of" refers to two and more than two. In an embodiment in which a plurality of mounting holes are arranged, the plurality of mounting holes are arranged at intervals.

The mounting structure 124 being the mounting hole arranged on the connecting part 1222 helps to simplify a structure of the box body 10 and reduce a weight of the box body 10.

In some embodiments, the mounting hole is provided with internal threads.

The mounting hole is provided with the internal threads, so that the internal device may fit with the mounting hole via the threads, thereby connecting the box body with the internal device with good stability in a simple and convenient manner.

In some other embodiments, a wall surface of the mounting hole is a smooth plane or a curved surface.

Referring to FIG. 10 and FIG. 11, in some embodiments, the mounting hole is a blind hole.

The mounting hole being a blind hole means that the mounting hole may not run through the connecting part 1222, thereby reducing the influence of arrangement of the mounting hole on a structural strength of the connecting part 1222, also eliminating the need for sealing treatment at the mounting hole, and thus reducing the difficulty in manufacturing the box body 10.

In some other embodiments, the mounting hole may also be a through hole.

Referring to FIG. 10 and FIG. 11, in some embodiments, the connecting part 1222 is provided with a plurality of mounting structures 124, and the plurality of mounting structures 124 are arranged at intervals.

The plurality of mounting structures 124 may be arranged at intervals along a direction perpendicular to the first direction. The plurality of mounting structures 124 may also be arranged in a matrix.

Since the connecting part 1222 is provided with the plurality of mounting structures 124 arranged at intervals, a plurality of mounting positions may be formed between the connecting part 1222 and the internal device, thereby not only making the connection between the box body 10 and the internal device more stable, but also reducing a load borne by each mounting position.

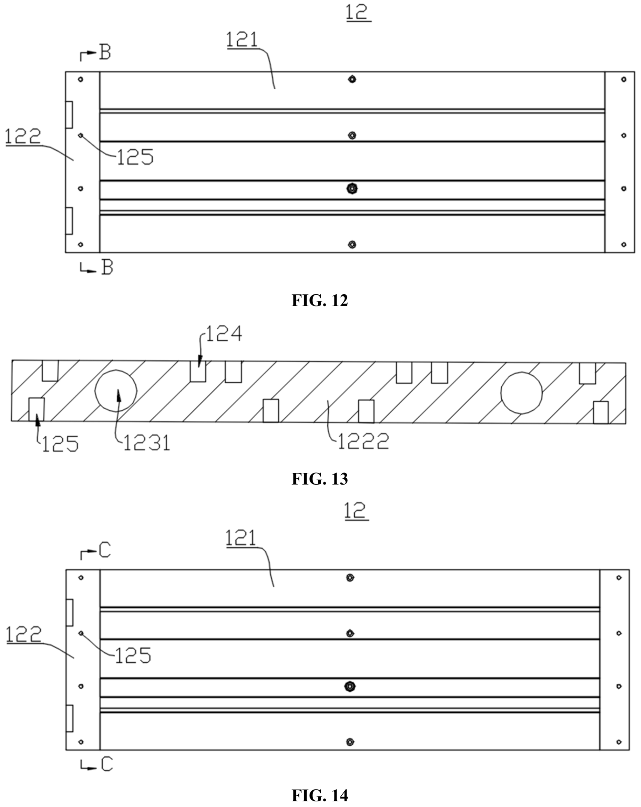

Referring to FIG. 12 and FIG. 13, a schematic bottom view of a second box body 12 according to some embodiments of the present application is provided in FIG. 12. A sectional view along B-B in FIG. 12 is provided in FIG. 13. The connecting part 1222 is provided with a hanging structure 125, and the hanging structure 125 is used to connect the box body 10 with an external device. The external device is located outside the box body 10.

The hanging structure 125 is a structure used to mount and fix the box body 10 to the external device. The external device may be an electrical device, a transportation device, a storage device, or the like.

The hanging structure 125 may be a through hole, a blind hole, a threaded hole, a hook, a slide rail, a guide rail, a lock catch, or the like. The hanging structure 125 may be a structure formed directly on the connecting part 1222, and is integrally formed with the connecting part 1222. For example, the hanging structure 125 is a threaded hole machined on the connecting part 1222, or the hanging structure 125 is a track formed by extrusion integrally with the connecting part 1222. The hanging structure 125 may also be formed on a part connected to the connecting part 1222. For example, the hanging structure 125 is a threaded hole on a part such as a sleeve and a nut, or the hanging structure 125 is a track on a guide rail.

The hanging structure 125 being arranged on the connecting part 1222, that is, both the mounting structure 124 and the hanging structure 125 being integrated with the face plate 122, is convenient for mounting and fixing the external device to the connecting part 1222. In this way, the number of hanging mounting beams may be reduced and the components of the box body 10 are simplified. In addition, since the number of the hanging mounting beams is reduced, the number of positions for welding is also reduced accordingly, thereby simplifying production and improving production efficiency.

In some embodiments, the hanging structure 125 includes a hanging hole.

The hanging hole may be directly arranged on the connecting part 1222. Along a thickness direction of the connecting part 1222, the hanging hole is recessed from a surface of the connecting part 1222 facing away from the inside of the box body 10 to that facing toward the inside of the box body 10. The hanging hole may be round, square, hexagonal, or the like.

One or a plurality of hanging holes may be arranged, wherein "a plurality of" refers to two and more than two. In an embodiment in which a plurality of hanging holes are arranged, the plurality of hanging holes are arranged at intervals.

The hanging structure 125 being the hanging hole arranged on the connecting part 1222 helps to simplify a structure of the box body 10 and reduce a weight of the box body 10.

In some embodiments, the hanging hole is provided with internal threads.

The hanging hole is provided with the internal threads, so that the external device may fit with the hanging hole via the threads, thereby connecting the box body with the external device with good stability in a simple and convenient manner.

In some other embodiments, a wall surface of the hanging hole is a smooth plane or a curved surface.

In some embodiments, the hanging hole is a blind hole.

The hanging hole being a blind hole means that the hanging hole may not run through the connecting part 1222, thereby reducing the influence of arrangement of the hanging hole on a structural strength of the connecting part 1222, also eliminating the need for sealing treatment at the hanging hole, and thus reducing the difficulty in manufacturing the box body 10.

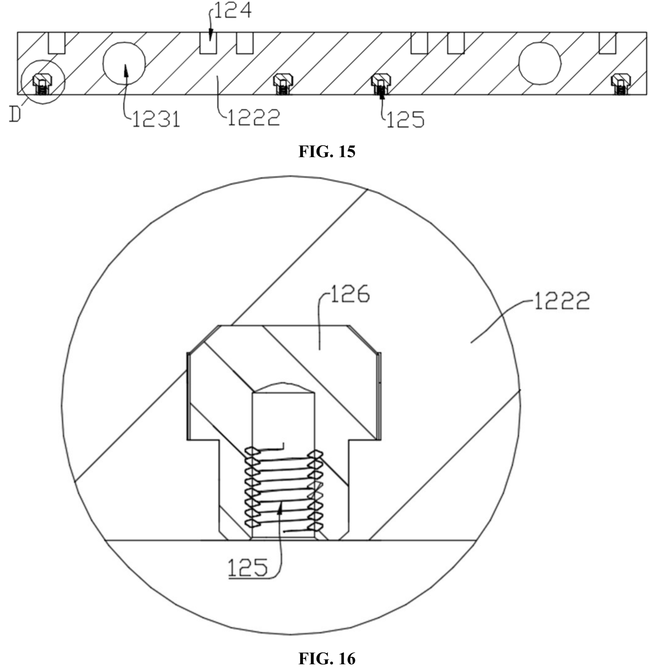

Referring to FIG. 14, FIG. 15, and FIG. 16, a schematic bottom view of a second box body 12 according to some other embodiments of the present application is provided in FIG. 14. A sectional view along C-C in FIG. 14 is provided in FIG. 15. An enlarged view of position D in FIG. 15 is provided in FIG. 16. In some other embodiments, the box body 10 includes a hanging component 126 arranged at the connecting part 1222, and the hanging structure 125 is arranged on the hanging component 126.

The hanging component 126 and the connecting part 1222 may be fixedly connected, for example, by bonding or welding. The hanging component 126 and the connecting part 1222 may also be detachably connected, for example, via a bolt and a screw. The external device is connected to the connecting part 1222 via the hanging component 126. The hanging structure 125 is indirectly arranged on the connecting part 1222 via the hanging component 126. The hanging component 126 may be a structural component such as a hanging beam, a corner piece, and a reinforcing plate. The hanging component 126 may also be a standard industrial component such as a sleeve, a nut, and a slide rail. The hanging structure 125, such as a through hole, a threaded hole, and a slot, may be machined on the hanging component 126. The hanging component 126 may also be a connecting structure that is built into a standard industrial component. For example, when the hanging component 126 is a nut, the hanging structure 125 is a threaded hole in the nut.

The connecting part 1222 may include one hanging component 126 or a plurality of hanging components 126. In an embodiment in which the connecting part 1222 includes a plurality of hanging components 126, the plurality of hanging components 126 are arranged at intervals on the connecting part 1222.

One hanging structure 125, or a plurality of hanging structures 125, may be arranged on one hanging component 126.

The hanging structure 125 is arranged on the hanging component 126, and the box body 10 may be connected to the external device via the hanging component 126, so that the box body 10 can be connected to the external device more conveniently.

In some embodiments, the hanging component 126 is welded to the connecting part 1222.

The hanging component 126 and the connecting part 1222 may be welded together by means of laser welding, ultrasonic welding, resistance welding, gas welding, or the like.

The hanging component 126 being welded to the connecting part 1222 is not only convenient for connection, but also enhances a connection strength between the hanging component 126 and the connecting part 1222 with a higher bearing capacity.

Referring to FIG. 14, FIG. 15, and FIG. 16, in some embodiments, the hanging component 126 is a sleeve, and the sleeve is provided with internal threads.

Since the hanging component 126 is the sleeve provided with the internal threads, the hanging component 126 and the external device are in threaded fit to hang the box body 10 on the external device with good stability in a simple and convenient manner.

Referring to FIG. 14, FIG. 15, and FIG. 16, in some embodiments, the connecting part 1222 is provided with a plurality of hanging structures 125, and the plurality of hanging structures 125 are arranged at intervals.

The plurality of hanging structures 125 may be arranged at intervals along a direction perpendicular to the first direction. The plurality of hanging structures 125 may also be arranged in a matrix.

Since the box body 10 includes the plurality of hanging structures 125 arranged at intervals, a plurality of hanging positions may be formed between the box body 10 and the external device, thereby not only making the connection between the box body 10 and the external device more stable, but also reducing a load borne by each hanging position.

In some embodiments, the face plate body 1221 and the connecting part 1222 are integrally formed.

The face plate body 1221 and the connecting part 1222 being integrally formed means that the face plate body 1221 and the connecting part 1222 are an integrated structure when manufactured. The face plate body 1221 and the connecting part 1222 may be integrally formed by die casting, and the face plate body 1221 and the connecting part 1222 may also be integrally formed by casting.

The face plate body 1221 and the connecting part 1222 being integrally formed achieves higher overall integrity and higher strength of the face plate 122.

In some embodiments, the box body 10 includes a side plate 127, the side plate 127 is arranged opposite to the face plate 122. The side plate 127 is connected to the other end of the end plate 121.

The face plate 122 and the side plate 127 are connected to two ends of the end plate 121 respectively. Along the first direction, the face plate 122 and the side plate 127 are arranged opposite to each other. The face plate 122, the end plate 121, and the side plate 127 are connected to form a U-shaped structure.

The face plate 122 and the side plate 127 opposite to the face plate 122 are arranged on end walls. On the one hand, the structural strength of the box body 10 can be improved. On the other hand, the space for accommodating the internal device can be defined, so that the internal device can be stably assembled in the box body 10. Furthermore, the face plate 122 and the side plate 127 protrude from the surface of the end plate 121, and when the internal device is glued to the end plate 121, a glue overflow space can be effectively controlled, to reduce waste and the risk of environmental pollution caused by glue overflow.

In some embodiments, the box body 10 includes a first box body 11 and a second box body 12, and the first box body 11 and the second box body 12 are separately arranged and connected. The second box body 12 includes the end plate 121, the face plate 122, and the side plate 127, and the first box body 11, the end plate 121, the face plate 122, and the side plate 127 together define an accommodating space.

"The first box body 11 and the second box body 12 being separately arranged and connected"means that the first box body 11 and the second box body 12 are provided separately, and then the first box body 11 and the second box body 12 are connected together. For example, the first box body 11 may be bolted to the second box body 12.

The end plate 121, the face plate 122, and the side plate 127 are all parts of the second box body 12. The second box body 12 may also include other walls. In this embodiment, the second box body 12 and the first box body 11 are connected to form the accommodating space of the box body 10 together.

The first box body 11 and the second box body 12 are convenient to be separately manufactured and assembled into the box body 10. The end plate 121, the face plate 122, and the side plate 127 are all located at the second box body 12.

Optionally, a sealing component 13 is arranged between the first box body 11 and the second box body 12, and the sealing component 13 is used to seal the first box body 11 and the second box body 12 to reduce the risk of external moisture entering the box body 10.

An embodiment of the present application further provides a battery 100. The battery 100 includes a battery cell and the aforementioned box body 10, and the battery cell is accommodated in the box body 10.

An embodiment of the present application further provides an electrical device. The electrical device includes the aforementioned battery 100, and the battery 100 is used to provide electrical energy for the electrical device.

Reference may be made to FIG. 2 to FIG. 16 for some embodiment of the present application.

An embodiment of the present application provides a box body 10, the box body 10 includes an end plate 121, a face plate 122, and a medium flow channel, and the face plate 122 is connected to one end of the end plate 121. The medium flow channel is used to accommodate a heat exchange medium. The medium flow channel is at least partially located on the end plate 121. The medium flow channel is provided with a medium inlet 1234 and a medium outlet 1235, and the medium inlet 1234 and/or the medium outlet 1235 is arranged on the face plate 122.

The box body 10 is provided with the medium flow channel, and the medium flow channel is used for the heat exchange medium to pass through to carry out thermal management on the device in the box body 10. The medium flow channel is at least partially located on the end plate 121, the medium inlet 1234 and/or the medium outlet 1235 of the medium flow channel is arranged on the face plate 122, and the heat exchange medium can directly enter and/or flow out of the medium flow channel through the medium inlet 1234 and/or the medium outlet 1235 on the face plate 122, so that pipelines for connecting the end plate 121 with the face plate 122 can be reduced or not used, an internal space of the box body 10 occupied by the pipelines can be reduced, and an energy density of the battery 100 can be improved.

The medium flow channel includes a first flow channel 1232 and a second flow channel 1231, the first flow channel 1232 is arranged on the end plate 121, and the second flow channel 1231 is arranged on the face plate 122. The second flow channel 1231 is communicated with the first flow channel 1232. The medium inlet 1234 or the medium outlet 1235 for the second flow channel 1231 is formed on the face plate 122. The first flow channel 1232 is arranged on the end plate 121, the second flow channel 1231 is arranged on the face plate 122, and the first flow channel 1232 is communicated with the second flow channel 1231. In this way, the heat exchange medium may be fed into the first flow channel 1232 on the end plate 121 through the second flow channel 1231 on the face plate 122, or the heat exchange medium in the first flow channel 1232 can be allowed to flow out through the second flow channel 1231, so that the pipelines for connecting the end plate 121 with the face plate 122 can be reduced or not used, an internal space of the box body 10 occupied by the pipelines can be reduced, and the energy density of the battery 100 can be improved.

The medium flow channel includes two second flow channels 1231, and the first flow channel 1232 communicates with the two second flow channels 1231. The medium inlet 1234 for one of the second flow channels 1231 is formed on the face plate 122, and the medium outlet 1235 for the other of the second flow channels 1231 is formed on the face plate 122. The first flow channel 1232 is arranged on the end plate 121, the two independent second flow channels 1231 are arranged on the face plate 122, and the first flow channel 1232 communicates with the two second flow channels 1231. In this way, the heat exchange medium may be fed into the first flow channel 1232 on the end plate 121 through one of the second flow channels 1231 on the face plate 122, and the heat exchange medium in the first flow channel 1232 may be allowed to flow out through the other of the second flow channels 1231, so that the pipelines for connecting the end plate 121 with the face plate 122 can be further reduced or not used, an internal space of the box body 10 occupied by the pipelines can be reduced, and the energy density of the battery 100 can be improved.

Along a first direction, the face plate 122 is connected to one end of the end plate 121. The face plate 122 includes a face plate body 1221 and a connecting part 1222, and the connecting part 1222 protrudes from the face plate body 1221 along the first direction. The connecting part 1222 connects the end plate 121 with the face plate body 1221, and the medium flow channel is partially formed at the connecting part 1222. The connecting part 1222 protruding from the face plate body 1221 along the first direction is convenient for connecting the face plate 122 to the end plate 121 by means of the connecting part 1222, for example, welding the connecting part 1222 to the end plate 121. The face plate body 1221 is a wall that encloses the accommodating space of the box body 10. The medium flow channel is partially formed in the connecting part 1222. After the connecting part 1222 is connected to the end plate 121, the medium flow channel is located outside the accommodating space, and the heat exchange medium in the medium flow channel is not likely to damage the device in the accommodating space.

The connecting part 1222 is provided with a mounting structure 124, the mounting structure 124 is used for mounting an internal device, and the internal device is accommodated in the box body 10. The mounting structure 124 being arranged on the connecting part 1222, that is, the mounting structure 124 being integrated with the face plate 122, is convenient for mounting and fixing the internal device to the connecting part 1222. In this way, the number of device mounting beams may be reduced and the components of the box body 10 are simplified. In addition, since the number of the device mounting beams is reduced, the number of positions for welding is also reduced accordingly, thereby simplifying production and improving production efficiency.

The connecting part 1222 is provided with a hanging structure 125, the hanging structure 125 is used to connect the box body 10 with an external device, and the external device is located outside the box body 10. The hanging structure 125 being arranged on the connecting part 1222, that is, both the mounting structure 124 and the hanging structure 125 being integrated with the face plate 122, is convenient for mounting and fixing the external device to the connecting part 1222. In this way, the number of hanging mounting beams may be reduced and the components of the box body 10 are simplified. In addition, since the number of the hanging mounting beams is reduced, the number of positions for welding is also reduced accordingly, thereby simplifying production and improving production efficiency.

The face plate body 1221 and the connecting part 1222 are integrally formed. The face plate body 1221 and the connecting part 1222 being integrally formed achieves higher overall integrity and higher strength of the face plate 122.

The above descriptions are merely preferred embodiments of the present application and are not intended to limit the present application. For those skilled in the art, the present application may have various modifications and changes. Any modification, equivalent replacement, improvement, and the like made within the spirit and principle of the present application shall fall within the scope of protection of the present application.

## Claims

1. A box body, comprising:
an end plate;
a face plate, connected to one end of the end plate; and
a medium flow channel, used to accommodate a heat exchange medium, the medium flow channel being at least partially located on the end plate, the medium flow channel being provided with a medium inlet and a medium outlet, and the medium inlet and/or the medium outlet being arranged on the face plate.

2. The box body according to claim 1, wherein the medium flow channel comprises a first flow channel and a second flow channel, the first flow channel being arranged on the end plate, the second flow channel being arranged on the face plate, the second flow channel being communicated with the first flow channel, and the medium inlet or the medium outlet for the second flow channel being formed on the face plate.

3. The box body according to claim 2, wherein the end plate comprises a first surface, a first opening for the first flow channel is formed on the first surface, the face plate comprises a second surface, and a second opening for the second flow channel is formed on the second surface, the first surface and the second surface being in contact, and the first opening being at least partially opposite to the second opening, so that the first flow channel is communicated with the second flow channel.

4. The box body according to claim 2 or 3, wherein the medium inlet or the medium outlet for the second flow channel is formed on the surface of the face plate facing away from the end plate.

5. The box body according to any one of claims 2 to 4, wherein along a first direction, the face plate is connected to one end of the end plate, and the second flow channel runs through two opposite surfaces of the face plate along the first direction.

6. The box body according to any one of claims 2 to 5, wherein the second flow channel comprises a first section and a second section, the first section being communicated with the second section, the medium inlet or the medium outlet being formed at one end of the first section facing away from the second section, the second section being communicated with the first flow channel, a cross section of the first section being circular, and cross sections of the second section and the first flow channel being both square.

7. The box body according to any one of claims 2 to 6, wherein the medium flow channel comprises two second flow channels, and the first flow channel communicates with the two second flow channels, the medium inlet for one of the second flow channels being formed on the face plate, and the medium outlet for the other of the second flow channels being formed on the face plate.

8. The box body according to any one of claims 1 to 7, wherein along a first direction, the face plate is connected to one end of the end plate, and the face plate comprises a face plate body and a connecting part, the connecting part protruding from the face plate body along the first direction, the connecting part connecting the end plate with the face plate body, and the medium flow channel being partially formed at the connecting part.

9. The box body according to claim 8, wherein the connecting part is provided with a mounting structure, the mounting structure being used for mounting an internal device, and the internal device being accommodated in the box body.

10. The box body according to claim 9, wherein the mounting structure comprises a mounting hole, the mounting hole being provided with internal threads.

11. The box body according to claim 10, wherein the mounting hole is a blind hole.

12. The box body according to any one of claims 9 to 11, wherein the connecting part is provided with a plurality of mounting structures, the plurality of mounting structures being arranged at intervals.

13. The box body according to any one of claims 8 to 12, wherein the connecting part is provided with a hanging structure, the hanging structure being used to connect the box body with an external device, and the external device being located outside the box body.

14. The box body according to claim 13, wherein the hanging structure comprises a hanging hole, the hanging hole being provided with internal threads.

15. The box body according to claim 14, wherein the hanging hole is a blind hole.

16. The box body according to any one of claims 13 to 15, wherein the box body comprises a hanging component arranged at the connecting part, and the hanging structure is arranged on the hanging component.

17. The box body according to claim 16, wherein the hanging component is welded to the connecting part.

18. The box body according to claim 16 or 17, wherein the hanging component is a sleeve, the sleeve being provided with internal threads.

19. The box body according to any one of claims 13 to 18, wherein the connecting part is provided with a plurality of hanging structures, the plurality of hanging structures being arranged at intervals.

20. The box body according to any one of claims 8 to 19, wherein the face plate body and the connecting part are integrally formed.

21. The box body according to any one of claims 1 to 20, wherein the box body comprises a side plate, the side plate being arranged opposite to the face plate, and the side plate being connected to the other end of the end plate.

22. The box body according to claim 21, wherein the box body comprises a first box body and a second box body, the first box body and the second box body being separately arranged and connected;
the second box body comprising the end plate, the face plate, and the side plate; and the first box body, the end plate, the face plate, and the side plate together defining an accommodating space.

23. A battery, comprising:
a battery cell; and
the box body according to any one of claims 1 to 22, the battery cell being accommodated in the box body.

24. An electrical device, comprising the battery according to claim 23, the battery being used to provide electrical energy for the electrical device.
